# EUROPEAN PATENT SPECIFICATION

(11) **EP 2 298 030 B1**
(45) Date of publication and mention of the grant of the patent: **14.10.2015**
(21) Application number: 09757914.8
(22) Date of filing: 22.05.2009
(51) Int. Cl.: H05B 33/08

(54) **LED LAMP DRIVER AND METHOD**
LED-LAMPEN-TREIBER UND VERFAHREN DAFÜR
CIRCUIT ET PROCÉDÉ D'ATTAQUE DE LAMPE À DEL

(30) Priority: 06.06.2008 US 59281
(43) Date of publication of application: 23.03.2011
(73) Proprietor: Koninklijke Philips N.V., 5656 AE Eindhoven (NL)
(72) Inventor: CRENSHAW, David, Briarcliff Manor, New York 10510-8001 (US); DE LIMA, Shane, Briarcliff Manor, New York 10510-8001 (US)
(74) Representative: Bekkers, Joost J.J.
(86) International application number: PCT/IB2009/052153
(87) International publication number: WO 2009/147563

(56) References cited:
- DE-A1- 2 422 438
- GB-A- 2 381 138
- US-A1- 2004 183 380
- US-A1- 2006 087 299
- US-B1- 6 266 254
- US-B2- 6 577 512

## Description

The present invention generally relates to LED-based lighting systems and power supplies therefore and, more particularly, to driver circuitry for LED lamps.

Digital lighting technologies, i.e. illumination based on semiconductor light sources, such as light-emitting diodes (LEDs), today offer a viable alternative to traditional fluorescent, HID, and incandescent lamps. Recent advances in LED technology coupled with its many functional advantages such as high energy conversion and optical efficiency, durability, and lower operating costs, has led to the development of efficient and robust full-spectrum lighting sources that enable a variety of lighting effects. New high-output, energy-efficient and ultra-compact LED light sources combine the lifetime and reliability advantages of traditional LEDs with higher brightness, making them particularly suitable for general illumination.

Semiconductor light sources (LEDs) are used increasingly in emergency lighting systems activated because of a malfunction in the general artificial lighting caused by a power interruption. The light source for emergency lighting can be powered by an emergency lighting power supply that uses energy from batteries, generating sets, specially protected mains supply, or other replacement energy sources. The National Fire Protection Association Life Safety Code (NFPA 101 Section 5-9) requires "Emergency lighting facilities for means of egress...to provide illumination along the path of egress in the event of failure of normal lighting."

Power supplies that operate LEDs, referred to herein as "LED lamp drivers," are different from power supplies used to operate gas discharge lamps, such as fluorescent lamps, called ballasts. The ballast serves many functions including starting the gas discharge lamp with high-voltage ignition, limiting the lamp current since these lamps have a negative voltage-to-current characteristic, and operating the lamp at the proper current and voltage. LEDs operate differently: there is no need for a high-voltage ignition, and the total voltage across a string of LEDs is much less than that of a fluorescent lamp of comparable light level. However, LED lamp drivers must still provide current limitation and some degree of current control.

LED current control presents two issues: (1) current limitation to avoid thermal runaway, and (2) current regulation to keep LED current within a specific range. Thermal runaway can occur due to increased LED temperature. Current passing through the LED increases the LED temperature, which allows more current to pass through the LED, further increasing the temperature. Current limitation is required to prevent thermal runaway and LED failure due to excessive heat. Current regulation is required to account for variations in LED characteristics and/or variations in the input voltage to the LED lamp driver.

Many conventional approaches to current limitation and regulation are inefficient, complex, unreliable, and/or expensive. One approach is to place a passive series impedance, such as a resistor, in series with the LED array. This approach is simple, but inefficient, as the resistor dissipates energy as heat. Another approach is to use an active series linear pass element, such as a transistor, in combination with feedback. This approach uses linear current regulators, which are complex, as well as being inefficient and being expensive. Yet another approach is to use switch-mode regulators, which are can use feedback and are relatively efficient, but are complex, expensive, and unreliable.

The use of LED lamp drivers for emergency lighting presents additional problems. The input voltage to the LED lamp driver in an emergency condition is often provided by an independent or low voltage source, such as a battery or low voltage emergency power. However, the LED lamp driver must produce a DC current sufficient to drive a serial string of LEDs, even though the input voltage to the LED lamp driver is limited to a low voltage. The input voltage must be stepped up to the voltage sufficient to drive the LEDs.

One approach to LED lamp driver design has been to use a flyback topology. Unfortunately, the flyback topology has several drawbacks. First, the flyback topology includes only one active switching element and therefore only utilizes the flyback transformer magnetic core over one quadrant. Second, the flyback topology operates such that the primary winding and secondary winding conduct current on alternate phases. During phase one, the primary winding conducts current while the secondary winding does not, which stores energy in the magnetic field of the flyback transformer. During phase two, this stored energy is released to the secondary winding via the transformer core, causing a secondary current to flow while no current flows in the primary. The primary and secondary windings do not conduct current at the same time. Therefore, the flyback topology cannot be a self resonant type circuit, but must include another means to control the switching frequency. Third, the secondary winding of the flyback topology has a discontinuous current, limiting the options for current limitation and regulation.

Document US 2004/0183380 A1 discloses a switching constant-current power supply system for a load. The setup according to the document comprises a first power converter circuit and a second power converter circuit. The first power converter circuit is connected to an input terminal and the second power converter circuit. During operation, the first power converter circuit delivers a defined voltage to the second power converter circuit. The voltage, delivered to the second power converter circuit depends on the current through the load, determined by a detector. The second power converter circuit transforms the supplied DC voltage into an AC or pulsed current, which is provided to the load.

Document US 6,266,254 B1 discloses a switching power circuit for use in a backlight of a liquid crystal display device. According to the figures, the disclosed circuit comprises two transistors, which are push-pull connected switching transistors. The switching transistors are connected with a transformer with primary winding, a secondary winding and tertiary winding, wherein the first winding is connected to two transistors. The tertiary winding serves to a generate self-oscillation, whereby the transistors are switched to generate AC voltage in the secondary winding. The AC voltage is rectified by diodes and is provided at an output terminal. Another approach to LED lamp driver design has been to use pulse width modulation (PWM) with feedback to sense the LED array current and to actively control the LED array current. Although effective, this approach is expensive for many applications. Thus, it would be desirable to provide an LED lamp driver and method that would address at least some of the above disadvantages.

Accordingly, one aspect of the present invention generally focuses on an LED lamp driver receiving low voltage DC power including a push-pull transformer circuit to step up the voltage, operably connected to receive the low voltage DC power and produce transformer AC power, the push-pull transformer circuit having switches responsive to steering signals; a self-resonant control circuit operably connected to the push-pull transformer circuit to generate the steering signals to close one switch alternately with the other switch and to generate regenerative oscillation; an AC/DC converter operably connected to receive the transformer AC power and produce high voltage DC power; and a current controller operably connected to receive the transformer AC power and produce controlled AC power for the AC/DC converter, which current controller provides an impedance to the transformer AC power and comprises a series capacitor.

Yet another aspect of the present invention contemplates a method of driving LED lamps from low voltage DC power including providing a push-pull transformer circuit to step up the voltage, the push-pull transformer circuit having switches responsive to steering signals; receiving the low voltage DC power at the transformer; controlling the transformer by generating steering signals to close one switch alternately with the other switch and to generate regenerative oscillation; produce transformer AC power; providing a converter for converting the transformer AC power to high voltage DC power; and providing a current controller operably connected to the transformer to receive transformer AC power and the current controller configured to provide impedance to the transformer AC power and comprising a series capacitor; and the current controller controlling the transformer AC power to produce controlled AC power for the converter.

The foregoing and other features and advantages of the invention will become further apparent from the following detailed description of the presently preferred embodiments, read in conjunction with the accompanying drawings. The detailed description and drawings are merely illustrative of the invention, rather than limiting the scope of the invention being defined by the appended claims and equivalents thereof.

As used herein for purposes of the present disclosure, the term "LED" should be understood to include any electroluminescent diode or other type of carrier injection/junction-based system that is capable of generating radiation in response to an electric signal. Thus, the term LED includes, but is not limited to, various semiconductor-based structures that emit light in response to current, light emitting polymers, organic light emitting diodes (OLEDs), electroluminescent strips, and the like. In particular, the term LED refers to light emitting diodes of all types (including semi-conductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, and white LEDs (discussed further below). It also should be appreciated that LEDs may be configured and/or controlled to generate radiation having various bandwidths (e.g., full widths at half maximum, or FWHM) for a given spectrum (e.g., narrow bandwidth, broad bandwidth), and a variety of dominant wavelengths within a given general color categorization.

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum. In one example of this implementation, electroluminescence having a relatively short wavelength and narrow bandwidth spectrum "pumps" the phosphor material, which in turn radiates longer wavelength radiation having a somewhat broader spectrum.

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, T-package mount LEDs, radial package LEDs, power package LEDs, LEDs including some type of encasement and/or optical **element** (e.g., a diffusing lens), etc.

In the drawings, like reference characters generally refer to the same parts throughout the different views. Also, the drawings are not necessarily to scale, emphasis instead generally being placed upon illustrating the principles of the invention.
**FIGS. 1-2** is a block and schematic diagrams, respectively, of an LED lamp driver in accordance with many embodiments of the present invention;
**FIG. 3** is a schematic diagram of an overvoltage protection circuit for an LED lamp driver shown in **FIGS. 1-2****;** and
**FIG. 4** is a flowchart of a method of driving LED lamps from low voltage DC power in accordance with various embodiments of the present invention.

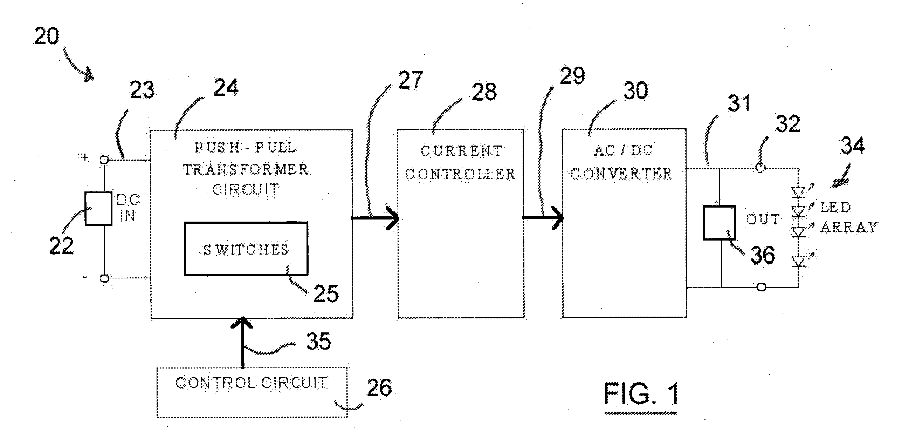

Referring to FIG. 1, an LED lamp driver 20 receives low voltage DC power 23 from a DC source 22 and produces high voltage DC power 31 at DC output 32 for an LED array 34. As defined herein, low voltage and high voltage are relative terms for the voltage of the DC power of the LED lamp driver 20, and not for the absolute value of the voltage: the voltage of low voltage DC power 23 at the DC source 22 is lower than the voltage of the high voltage DC power 31 needed to drive the LED array 34 at the DC output 32. The LED array 34 requires DC power for operation. The LED lamp driver 20 includes a push-pull transformer circuit 24 operably connected to receive the low voltage DC power 23 from the DC source 22 and produce transformer AC power 27; a self resonant control circuit 26 operably connected to the push-pull transformer circuit 24 to generate the steering signals 35; a current controller **28** operably connected to receive the transformer AC power **27** and produce controlled AC power **29;** and an AC/DC converter **30** operably connected to receive the controlled AC power **29** and produce the high voltage DC power **31** at the DC output **32.** The push-pull transformer circuit **24** includes switches **25** responsive to steering signals **35** from the self resonant control circuit **26.** The LED lamp driver **20** can also include an optional overvoltage protection circuit **36** operably connected across the DC output **32.**

The LED lamp driver **20** uses the push-pull transformer circuit **24** to step up the voltage from the low voltage DC source **22** to a level sufficient to drive the series string of LEDs in the LED array **34.** The push-pull transformer circuit **24** is a low-cost, simple, and efficient means to boost or step up the voltage from a low-voltage DC source. This push-pull transformer circuit **24** can also be called a converter or an inverter, because it converts the low voltage DC power **23** at the DC source **22** on the primary side of the push-pull transformer circuit **24** to the transformer AC power **27** on the secondary side of the push-pull transformer circuit **24.** The voltage across the secondary side of the push-pull transformer circuit **24** is approximately equal to the sum of the voltages across the current controller **28,** the AC/DC converter **30,** and the LED array **34.**

The current controller **28** receives transformer AC power **27** and delivers controlled AC power **29.** The current controller **28** is a current limiting capacitor operably connected in series with the LED array **34.** Current through the capacitor is alternating current, and so must maintain a capacitor amp-second balance, i.e., capacitor charge balance. Therefore, the current exiting the capacitor is also an alternating current. The AC/DC converter **30** converts the controlled AC power **29** to the high voltage DC power **31,** which can be used to power the LED array **34.**

The DC source **22** can be a battery or other low voltage DC source. The voltage of the DC source **22** is lower than the voltage needed to drive the LED array **34** including a series string of LEDs at DC output **32.** When the DC source **22** is a battery operably connected to produce the low voltage DC power **23** and an LED array **34** is operably connected to receive the high voltage DC power **31,** the LED lamp driver **20** can be used as a stand alone light source for emergency lighting.

The push-pull transformer circuit **24** includes switches **25** to switch the direction of current flow through the push-pull transformer circuit **24.** In one embodiment, the push-pull transformer circuit **24** includes two switches, each alternately conducting approximately 50% of the period T, which is the inverse of the switching frequency. One switch conducts current through one primary winding of the push-pull transformer circuit **24** to cause magnetic core flux in one direction, then the other switch conducts on the alternate half-period, conducting current through the second primary winding of the push-pull transformer circuit **24** causing magnetic core flux in the alternate direction. The push-pull topology utilizes the available transformer magnetic capacity to a high degree. The push-pull topology also facilitates operation in a self resonant mode because the primary and secondary windings of the push-pull transformer circuit **24** conduct current simultaneously. The operation in a self resonant mode allows use of a simple, efficient, and effective self resonant control circuit **26.** The self resonant control circuit **26** can be internal to or external of the push-pull transformer circuit **24.**

The self resonant control circuit **26** provides steering signals to the switches **25** to initiate positive feedback and to establish regenerative oscillation. The switching frequency is given by f = (1/ (2π√/LC)), where L and C are the lump-sum circuit inductance and capacitance respectively, dominated by the secondary circuit and including to a small degree, the total inductance and capacitance on the primary side of the transformer. The frequency parameter can be selected to facilitate choice of inductance value and size, transformer size and design, and capacitor value and size necessary to deliver sufficient voltage and current to the LED array over a range of battery voltages, with consideration of efficiency and cost. The component values in the self resonant control circuit **26** and rest of the LED lamp driver are selected for high frequency switching, which facilitates the use of very small and efficient inductors and transformers. High frequency switching also allows small, inexpensive capacitors to be used as the current controller **28.**

The current controller **28** provides current regulation using a passive series impedance method with a simple capacitor placed in series with the LED array **34.** This provides appropriate current limiting and adequate current regulation for emergency lighting. The AC/DC converter **30** can be a rectifier, such as a full wave diode bridge rectifier.

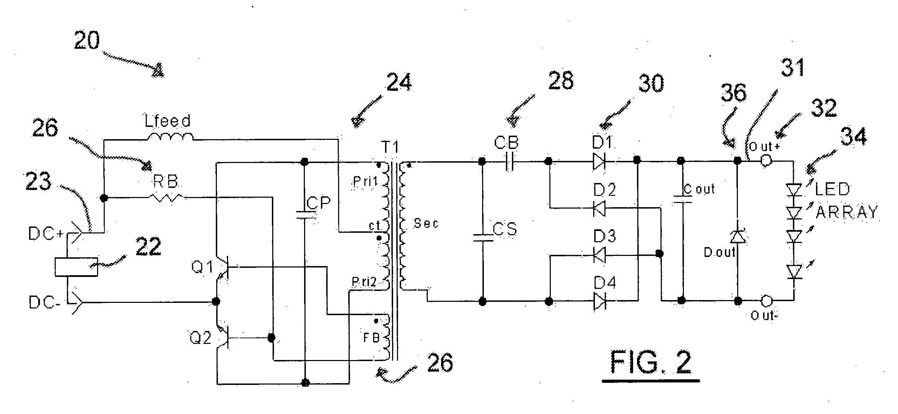

**FIG. 2****,** in which like elements share like reference numbers with **FIG. 1****,** is a schematic diagram of an LED lamp driver in accordance with various embodiments of the present invention. The LED lamp driver uses a push-pull transformer circuit, i.e., a circuit including a transformer operated in a push-pull topology. A feedback winding on the push-pull transformer is connected to each of two switches in the push-pull transformer to provide steering signals to the two switches. The self resonant control circuit including the feedback winding implements a positive feedback (regenerative feedback) function, so that the LED lamp driver operates in a self resonant mode.

The push-pull transformer circuit **24** includes push-pull transformer **T1,** switching transistor **Q1,** switching transistor **Q2,** base-drive resistor **RB,** and feed inductor **Lfeed.** In this embodiment, the push-pull transformer circuit **24** further includes optional primary capacitor **CP** and optional secondary capacitor **CS.** The self resonant control circuit **26** includes transformer feedback winding **FB** and base drive resistor **RB.** The current control element **28** is ballasting capacitor **CB.** The AC/DC converter **30** includes diodes **D1, D2, D3,** and **D4** forming a full wave rectifier, which can be fabricated from discrete diodes or can be an integrated circuit (IC) package. Input terminals **DC+** and **DC-** connect to the respective + and-terminals of a low voltage DC supply, such as a battery or other DC source. The LED lamp driver **20 can** optionally include a filter capacitor **Cout** across the DC output **32** and/or a protection diode **Dout** as an overvoltage protection circuit **36** across the DC output **32.**

The push-pull transformer **T1** has a first primary winding **Pri1,** a second primary winding **Pri2,** a feedback winding **FB** coupled to the first primary winding **Pri1** and the second primary winding **Pri2,** and a secondary winding **Sec** coupled to the first primary winding **Pri1** and the second primary winding **Pri2.** Switching transistor (switch) **Q1** is responsive to a steering signal from one end of the feedback winding **FB** and switching transistor (switch) **Q2** is responsive to another steering signal from the other end of the feedback winding **FB.** The steering signals are operably connected to close one switching transistor (switch) **Q1** alternately with the other switching transistor (switch) **Q2.** Current flows through the first primary winding **Pri1** in a first direction when one switching transistor (switch) **Q1** is closed and through the second primary winding **Pri2** in a direction opposite the first direction when the other switching transistor (switch) **Q2** is closed. With the center tap ct between the first primary winding **Pri1** and the second primary winding **Pri2,** one circuit is provided from the DC input terminal **DC+** to the center tap **ct,** through the first primary winding **Pri1,** through the switching transistor (switch) **Q1,** to the DC input terminal **DC-** when the switching transistor (switch) **Q1** is closed, and another circuit is provided from the DC input terminal **DC+ to** the center tap ct, through the second primary winding **Pri2,** through the switching transistor (switch) **Q2,** to the DC input terminal **DC-** when the switching transistor (switch) **Q2** is closed. When a battery operably connected across DC input terminals **DC+** and **DC-** to provide the low voltage DC power **23** and an LED array **34** is operably connected to receive the high voltage DC power **31,** the LED lamp driver **20** can be used as a stand alone light source for emergency lighting.

The feed inductor **L_{feed}** is an inductor connecting the **DC+** input terminal to the center tap **ct** terminal of first and second primary windings **Pri1** and **Pri2,** while the **DC-** input terminal connects to the emitters of both switching transistors **Q1** and **Q2** providing a current return path for switching transistors **Q1** and **Q2.** The feed inductor **Lfeed** provides a current sourced supply to primary windings **Pri1** and **Pri2** of push-pull transformer **T1.** Transformer primary winding windings **Pri1** and **Pri2** are substantially identical and electrically connected at center tap **ct** in an alternate phase arrangement. The inductance value of feed inductor **L_{feed}** can be selected to provide an average current to primary windings **Pri1** and **Pri2** such that the peak-to-peak current ripple through primary windings **Pri1** and **Pri2** is an acceptable value. Once current flow is established in an inductor, the average current impedes abrupt change of direction. Therefore, for short switching periods T=1/f, the feed inductor **L_{feed}** serves as a current source of constant value to primary windings **Pri1** and **Pri2.** Those skilled in the art will appreciate that the inductance value of feed inductor **L_{feed}** can be any value, including zero, as desired for a particular application.

The primary windings **Pri1** and **Pri2** are electrically connected to the collectors of switching transistors **Q1** and **Q2,** respectively. The switching transistors **Q1** and **Q2** are active solid-state switches, conducting on alternate cycles, and causing current conduction through respective primary windings **Pri1** and **Pri2** on alternate cycles. The switching transistors **Q1** and **Q2** are responsive to steering signals from opposite ends of transformer feedback winding **FB.** The optional primary capacitor **CP** can provide additional noise filtering for transistors **Q1** and **Q2** across the primary windings **Pri1** and **Pri2** of the transformer **T1.** The two half-cycle alternate conduction phases of primary windings **Pri1** and **Pri2** cause continuous full-cycle AC current to flow through transformer secondary winding **Sec.**

The transformer feedback winding **FB** is connected to the base lead of transistors **Q1** and **Q2** and provides steering signals in the proper phase to transistors **Q1** and **Q2** to initiate positive feedback and to establish regenerative oscillation. Base drive resistor **RB** supplies the necessary base current to switching transistors **Q1** and **Q2** to fully saturate the switching transistors **Q1** and **Q2** when each switching transistor **Q1** and **Q2** alternately conducts.

A voltage potential is established across transformer secondary winding **Sec** as a result of the turns ratio between transformer secondary winding **Sec** and transformer primary winding **Pri1.** The AC voltage of transformer secondary winding **Sec** can also be established across optional capacitor **CS,** which is a secondary capacitor used to (1) filter unwanted noise signals during transient conditions and during open load conditions, (2) serve as an additional design parameter to help set the resonant frequency f, and (3) prevent a high frequency runaway condition or unintended oscillating conditions by serving as a load to transformer secondary winding **Sec** should the DC output **32** across the LED array **34** become an open circuit during operation.

The ballasting capacitor **CB** functions as a series connected current control element **28** for the LED array **34.** The ballasting capacitor **CB** has three primary functions integral to the operation of this push-pull self resonant circuit: (1) to provide AC current limiting to prevent thermal runaway of the LED array **34,** (2) to provide current regulation for the LED array **34** as variations in the LED array characteristics occur, and (3) to provide the dominant capacitance necessary for the oscillatory function of the self resonant circuit.

The ballasting capacitor **CB** provides an impedance to the transformer AC power current such that the controlled AC power to the AC/DC converter **30** is limited to a calculated value desired, limiting the high voltage DC power to the LED array **34.** The capacitor value of the ballasting capacitor **CB** can be selected so that the high voltage DC power current to the LED array **34** is limited and well regulated over large variations in LED voltages for constant voltages of low voltage DC power. The ballasting capacitor **CB** can be a high quality capacitor, which dissipates almost no energy due to the effective series resistance of the capacitor. High quality capacitors include capacitors with a high quality dielectric, such as a film or ceramic dielectric.

The ballasting capacitor **CB** is AC coupled to the full wave rectifier circuit arrangement comprised of diodes **D1, D2, D3,** and **D4.** This rectifier arrangement is connected such that diodes **D1** and **D3** conduct on one half of the AC cycle while diodes **D2** and **D4** are off (not forward-biased) and thus not conducting. Alternately, diodes **D2** and **D4** conduct on the alternate half of the AC cycle while diodes **D1** and **D3** are off (not forward-biased) and thus not conducting. This action produces a DC current to drive the LED array **34** to match the DC driven requirement for the LED array **34.** The filter capacitor **Cout** is an optional filter capacitor to smooth the DC output current and reduce the amount of AC ripple current through the LED array **34.**

The optional protection diode **Dout** is an overvoltage protection circuit **36: (1)** to protect the LED array **34** from high voltage unintentionally generated by the AC/DC converter **30,** and **(2)** to protect diodes **D1, D2, D3,** and **D4** from excessive high voltage should a high voltage be imposed across the LED array **34** from external sources. High voltage can exist in the event of an open circuit across the DC output **32,** an intermittent connection to the LED array **34,** an open circuit connection between the LED lamp driver **20** and the LED array **34,** or a defective LED array **34.** The optional protection diode Dout can be a Zener diode or a transient voltage suppressor (TVS) Zener diode. In one example, if the LED load is rated to operate at 15 Volts (DC) in emergency mode and its absolute maximum forward voltage is 21 Volts (DC), an 18 Volt protection diode **Dout** can be used to prevent an over voltage condition. The AC/DC converter **30** will continue to supply current to the protection diode **Dout** causing it to dissipate power and thereby generating heat. If the LED load is rated to operate at 300 mA (DC) in emergency mode and an 18 Volt Zener diode is used, the Zener diode would need to be rated for at least 5.4 Watts. The Zener diode can use one or more heat sinks to dissipate the heat generated. Those skilled in the art will appreciate that the overvoltage protection circuit **36** can be omitted as desired.

The DC output terminals **Out+** and **Out-** of the DC output **32** connect to the respective + and - terminals of the LED array **34.** Those skilled in the art will appreciate that the circuit of **FIG. 2** is exemplary and different circuits can be used as desired for a particular application.

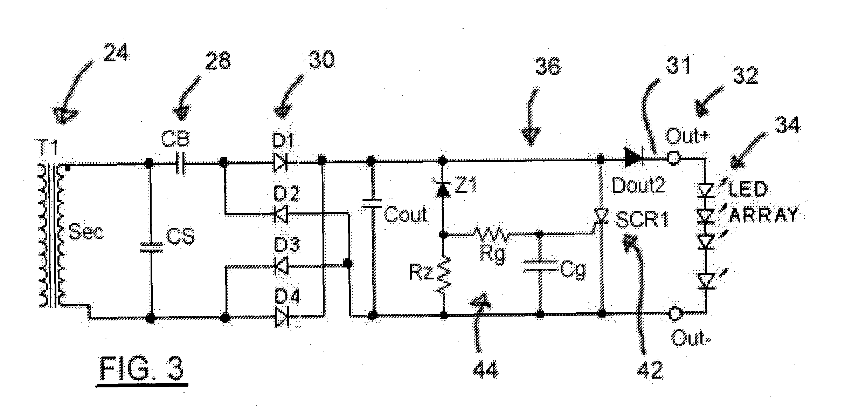

**FIG. 3****,** in which like elements share like reference characters with **FIGS. 1** and **2****,** is a schematic diagram of an overvoltage protection circuit for an LED lamp driver. In one embodiment, the overvoltage protection circuit uses a silicon controlled rectifier (SCR) to limit and/or clamp high voltage in an over voltage condition. The overvoltage protection circuit **40** includes a silicon controlled rectifier **SCR142** connected in parallel with the LED array **34** across the DC output **32.** The overvoltage protection circuit **40** further includes an SCR trigger circuit **44** connected to the gate of the silicon controlled rectifier **SCR142.** The SCR trigger circuit **44** has a diode **Z1,** a resistor **Rz,** a resistor **Rg,** and a capacitor **Cg.** The diode **Z1,** which can be a Zener diode, a DIAC, or the like, is connected in series with the resistor Rz in parallel with the silicon controlled rectifier **SCR142.** The resistor **Rg** is connected from the junction between the diode **Z1** and the resistor **Rz** to the gate of the silicon controlled rectifier **SCR142.** The capacitor **Cg** is connected from the gate of the silicon controlled rectifier **SCR142** to the cathode of the silicon controlled rectifier **SCR142.**

During normal operation, current passes through the LED array **34.** Diode **Dout2** assures the proper direction of the current flow through the LED array **34.** The silicon controlled rectifier **SCR142** is off, with only leakage current passing through the silicon controlled rectifier **SCR142.** In addition to the anode and cathode of a normal diode, an SCR has a gate to control the threshold of current conduction from the anode to the cathode. During a fault condition, the SCR trigger circuit **44** applies a voltage to the gate of silicon controlled rectifier **SCR142** to turn on the silicon controlled rectifier **SCR142** so that it conducts. The resistor **Rg** and capacitor **Cg** of the SCR trigger circuit **44** provide a time delay for reaching the trigger voltage preventing spurious actuation. The current flows through the silicon controlled rectifier **SCR142** rather than the LED array **34** to protect the LED array **34** from overcurrent. Once the silicon controlled rectifier **SCR142** is triggered, current flows through the silicon controlled rectifier **SCR142** as long as current from the anode to the cathode remains above the holding current, so the current through the diode **Z1** required to trigger the silicon controlled rectifier **SCR142** does not need to be maintained. When the current drops below the holding current, the silicon controlled rectifier **SCR142** stops conducting and normal operation resumes.

The values of the various components of the overvoltage protection circuit **40** can be selected as desired for a particular application. In one example, the normal operating voltage across the DC output **32** supplying the LED array **34** is 15 Volts (DC) and the absolute maximum forward voltage is 21 Volts (DC). The normal current through the LED array **34** is 300 mA (DC), so the silicon controlled rectifier **SCR142** can be an SCR rated for 500 mA (DC) so that the silicon controlled rectifier **SCR142** can handle a fault current. The value of the diode **Z1** can be selected to trigger the silicon controlled rectifier **SCR142** before the critical voltage of the LED array **34** is reached. If the DC output **32** supplying the LED array **34** is rated to operate at 15 Volts (DC) during normal operation and the absolute maximum forward voltage of the LED array **34** is 21 Volts (DC), the diode **Z1** can be a Zener diode with an 18 Volt breakdown voltage. The value of the resistor **Rz** is selected to ensure the necessary current flows through the diode **Z1** when the diode **Z1** breaks down during an overvoltage condition. If 2 Volts is applied across the resistor **Rz** during an overvoltage condition to trigger the silicon controlled rectifier **SCR1 42, and** 20 mA is required to pass through the diode **Z1,** then the value of resistor **Rz** can be selected as 100 Ohms. The values of the resistor **Rg** and capacitor **Cg** of the SCR trigger circuit **44** can be selected to provide the desired time constant for triggering the silicon controlled rectifier **SCR142** and avoiding spurious actuation. If the value of resistor **Rg** is selected as 1000 Ohms and the value of capacitor **Cg** is selected as 0.1 microfarads, the SCR trigger circuit **44** has a time constant of **100** micro-seconds. Those skilled in the art will appreciate that the selection of values for the diode **Z1,** resistor **Rg,** and capacitor **Cg** can be selected to assure that the overvoltage protection circuit **40** only actuates during a fault condition.

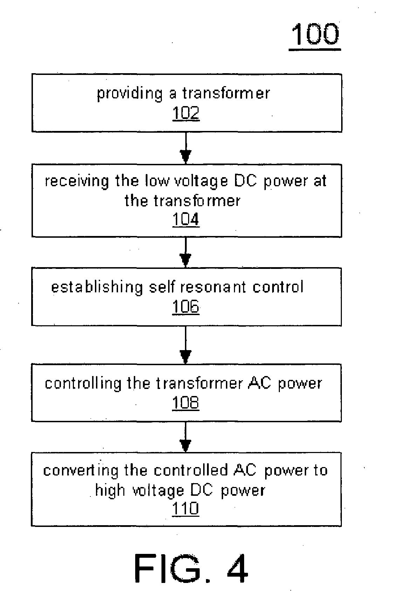

**FIG. 4** is a flowchart of a method of driving LED lamps from low voltage DC power in accordance with various embodiments of the present invention. The method **100** includes providing a transformer **102** having a first primary winding, a second primary winding, and a secondary winding coupled to the first primary winding and the second primary winding; receiving the low voltage DC power at the transformer **104;** establishing self resonant control **106** to alternately switch current between the first primary winding and the second primary winding, and produce transformer AC power at the secondary winding; controlling the transformer AC power **108** to produce controlled AC power; and converting the controlled AC power to high voltage DC power **110.** The method **100** can further comprise preventing overvoltage from the high voltage DC power, filtering noise across the first primary winding and the second primary winding, and/or filtering noise across the secondary winding.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. An LED lamp driver receiving low voltage DC power, the LED driver comprising:
a push-pull transformer circuit (24) to step up the voltage, operably connected to receive the low voltage DC power (23) and produce transformer AC power (27), the push-pull transformer circuit (24) having switches (25) responsive to steering signals (35);
a self resonant control circuit (26) operably connected to the push-pull transformer circuit (24) to generate the steering signals (35) to close one switch alternately with the other switch and to generate regenerative oscillation;
an AC/DC converter (30) operably connected to receive the transformer AC power (27) and produce high voltage DC power (31),
**characterized in that**
a current controller (28) is operably connected to receive the transformer AC power (27) and is configured to produce controlled AC power (29) for the AC/DC converter (30), which current controller (28) provides impedance to the transformer AC power (27) and comprises a series capacitor.

2. The LED lamp driver of claim 1, further comprising an overvoltage protection circuit (36) operably connected across the DC output (32) of the AC/DC converter (30).

3. The LED lamp driver of claim 2, wherein the overvoltage protection circuit (36) is a diode.

4. The LED lamp driver of claim 2, wherein the overvoltage protection circuit (36) comprises a silicon controlled rectifier (42) operably connected to an SCR trigger circuit (44), wherein the SCR trigger circuit (44) is responsive to overvoltage across the DC output (32) to turn on the silicon controlled rectifier (42).

5. The LED lamp driver of claim 1, wherein
the switches (25) comprise a first switch and a second switch,
the steering signals (35) comprise a first steering signal and a second steering signal, and
the push-pull transformer circuit (24) comprises a push-pull transformer having
a first primary winding,
a second primary winding,
a feedback winding coupled to the first primary winding and the second primary winding, and
a secondary winding coupled to the first primary winding and the second primary winding; the first switch being responsive to the first steering signal from a first end of the feedback winding; and the second switch being responsive to the second steering signal from a second end of the feedback winding, the first steering signal and the second steering signal being operably connected to close the first switch alternately with the second switch.

6. The LED lamp driver of claim 1, further comprising a battery operably connected to produce the low voltage DC power (23), and an LED array (34) operably connected to receive the high voltage DC power (31), the LED lamp driver being a light source for emergency lighting.

7. The LED lamp driver of claim 5, wherein the transformer has a center tap between the first primary winding and the second primary winding, the LED lamp driver further comprising:
a first DC circuit from a first DC input terminal to the center tap, through the first primary winding, through the first switch, to the second DC input terminal when the first switch is closed; and
a second DC circuit from the first DC input terminal to the center tap, through the second primary winding, through the second switch, to the second DC input terminal when the second switch is closed.

8. The LED lamp driver of claim 7, further comprising a feed inductor operably connected between the first DC input terminal and the center tap in the first DC circuit and the second DC circuit.

9. The LED lamp driver of claim 5, further comprising a noise filter operably connected across the first primary winding and the second primary winding and/or a noise filter operably connected across the secondary winding.

10. A method of driving LED lamps from low voltage DC power, the method comprising:
providing a push-pull transformer circuit to step up the voltage, the push-pull transformer circuit having switches responsive to steering signals;
receiving the low voltage DC power at the transformer;
controlling the transformer by generating the steering signals to close one switch alternately with the other switch and to generate regenerative oscillation;
produce transformer AC power; and
providing a converter for converting the transformer AC power to high voltage DC power,
**characterized by**
providing a current controller, operably connected to the transformer to receive transformer AC power and the current controller configured to provide impedance to the transformer AC power and comprising a series capacitor; and
the current controller controlling the transformer AC power to produce controlled AC power for the converter.

## Patentansprüche

1. LED-Lampentreiber zur Aufnahme einer Niederspannungs-DC-Leistung, wobei der LED-Treiber umfasst:
eine Push-Pull-Transformatorschaltung (24) zur Erhöhung der Spannung, die so funktional verbunden ist, dass sie die Niederspannungs-DC-Leistung (23) aufnimmt und AC-Transformatorleistung (27) erzeugt, wobei die Push-Pull-Transformatorschaltung (24) auf Steuersignale (35) ansprechende Schalter (25) aufweist;
eine Eigenresonanz-Steuerschaltung (26), die mit der Push-Pull-Transformatorschaltung (24) funktional verbunden ist, um die Steuersignale (35) zu erzeugen und einen Schalter abwechselnd mit dem anderen Schalter zu schließen und regenerative Oszillation zu erzeugen;
einen AC/DC-Umsetzer (30), der so funktional verbunden ist, dass er die AC-Transformatorleistung (27) empfängt und Hochspannungs-DC-Leistung (31) erzeugt,
**dadurch gekennzeichnet, dass**
ein Stromregler (28) so funktional verbunden ist, dass er die AC-Transformatorleistung (27) empfängt und so eingerichtet ist, dass er geregelte AC-Leistung (29) für den AC/DC-Umsetzer (30) erzeugt, wobei der Stromregler (28) eine Impedanz für die AC-Transformatorleistung (27) vorsieht und einen Reihenkondensator umfasst.

2. LED-Lampentreiber nach Anspruch 1, der weiterhin eine Überspannungsschutzschaltung (36) umfasst, die an den DC-Ausgang (32) des AC/DC-Umsetzers (30) funktional angeschlossen ist.

3. LED-Lampentreiber nach Anspruch 2, wobei die Überspannungsschutzschaltung (36) eine Diode ist.

4. LED-Lampentreiber nach Anspruch 2, wobei die Überspannungsschutzschaltung (36) einen mit einer SCR-Triggerschaltung (44) funktional verbundenen, siliciumgesteuerten Gleichrichter (42) umfasst, wobei die SCR-Triggerschaltung (44) auf Überspannung an dem DC-Ausgang (32) anspricht, um den siliciumgesteuerten Gleichrichter (42) einzuschalten.

5. LED-Lampentreiber nach Anspruch 1, wobei
die Schalter (25) aus einem ersten Schalter und einem zweiten Schalter bestehen,
die Steuersignale (35) aus einem ersten Steuersignal und einem zweiten Steuersignal bestehen, und
die Push-Pull-Transformatorschaltung (24) aus einem Push-Pull-Transformator besteht mit
einer ersten Primärwicklung,
einer zweiten Primärwicklung,
einer mit der ersten Primärwicklung und der zweiten Primärwicklung gekoppelten Rückkopplungswicklung, sowie
einer mit der ersten Primärwicklung und der zweiten Primärwicklung gekoppelten Sekundärwicklung, wobei der erste Schalter auf das erste Steuersignal von einem ersten Ende der Rückkopplungswicklung anspricht, und wobei der zweite Schalter auf das zweite Steuersignal von einem zweiten Ende der Rückkopplungswicklung anspricht, wobei das erste Steuersignal und das zweite Steuersignal funktional verbunden sind, um den ersten Schalter abwechselnd mit dem zweiten Schalter zu schließen.

6. LED-Lampentreiber nach Anspruch 1, der weiterhin eine zur Erzeugung der Niederspannungs-DC-Leistung (23) funktional geschaltete Batterie sowie ein zur Aufnahme der Hochspannungs-DC-Leistung (31) funktional geschaltetes LED-Array (34) umfasst, wobei der LED-Lampentreiber eine Lichtquelle zur Notbeleuchtung ist.

7. LED-Lampentreiber nach Anspruch 5, wobei der Transformator eine Mittelanzapfung zwischen der ersten Primärwicklung und der zweiten Primärwicklung aufweist, wobei der LED-Lampentreiber weiterhin umfasst:
eine erste DC-Schaltung von einem ersten DC-Eingangsanschluss zu der Mittelanzapfung, durch die erste Primärwicklung, durch den ersten Schalter, zu dem zweiten DC-Eingangsanschluss, wenn der erste Schalter geschlossen ist; und
eine zweite DC-Schaltung von dem ersten DC-Eingangsanschluss zu der Mittelanzapfung, durch die zweite Primärwicklung, durch den zweiten Schalter, zu dem zweiten DC-Eingangsanschluss, wenn der zweite Schalter geschlossen ist.

8. LED-Lampentreiber nach Anspruch 7, der weiterhin eine Speisedrossel umfasst, die zwischen dem ersten DC-Eingangsanschluss und der Mittelanzapfung in der ers-ten DC-Schaltung und der zweiten DC-Schaltung funktional geschaltet ist.

9. LED-Lampentreiber nach Anspruch 5, der weiterhin einen Rauschfilter, der über die erste Primärwicklung und die zweite Primärwicklung funktional geschaltet ist, und/oder einen Rauschfilter, der über die Sekundärwicklung funktional geschaltet ist, umfasst.

10. Verfahren zur Ansteuerung von LED-Lampen mit Hilfe von Niederspannungs-DC-Leistung, wobei das Verfahren die folgenden Schritte umfasst, wonach:
eine Push-Pull-Transformatorschaltung zur Erhöhung der Spannung vorgesehen wird, wobei die Push-Pull-Transformatorschaltung auf Steuersignale ansprechende Schalter aufweist;
die Niederspannungs-DC-Leistung an dem Transformator empfangen wird;
der Transformator gesteuert wird, indem die Steuersignale erzeugt werden, um einen Schalter abwechselnd mit dem anderen Schalter zu schließen und regenerative Oszillation zu erzeugen;
AC-Transformatorleistung erzeugt wird; und
ein Umsetzer vorgesehen wird, um die AC-Transformatorleistung in Hochspannungs-DC-Leistung umzuwandeln,
**dadurch gekennzeichnet, dass**
ein Stromregler vorgesehen wird, der zur Aufnahme der AC-Transformatorleistung mit dem Transformator funktional verbunden ist, wobei der Stromregler so eingerichtet ist, dass er eine Impedanz für die AC-Transformatorleistung vorsieht und einen Reihenkondensator umfasst; und
der Stromregler die AC-Transformatorleistung steuert, um geregelte AC-Leistung für den Umsetzer zu erzeugen.

## Revendications

1. Circuit d'attaque de lampe à DEL recevant une alimentation en courant continu à faible tension, le circuit d'attaque de DEL comprenant :
un circuit transformateur symétrique (24) pour élever la tension, connecté de manière fonctionnelle pour recevoir l'alimentation en courant continu à faible tension (23) et produire une alimentation à courant alternatif de transformateur (27), le circuit transformateur symétrique (24) possédant des commutateurs (25) qui réagissent à des signaux de pilotage (35) ;
un circuit de commande à résonance propre (26) connecté de manière fonctionnelle au circuit transformateur symétrique (24) pour générer les signaux de pilotage (35) pour fermer un commutateur en alternance avec l'autre commutateur et pour générer une oscillation régénératrice ;
un convertisseur courant alternatif/courant continu (30) connecté de manière fonctionnelle pour recevoir l'alimentation à courant alternatif de transformateur (27) et produire une alimentation en courant continu à haute tension (31),
**caractérisé en ce que**
un régulateur de courant (28) est connecté de manière fonctionnelle pour recevoir l'alimentation à courant alternatif de transformateur (27) et est conçu pour produire une alimentation à courant alternatif régulée (29) pour le convertisseur courant alternatif/courant continu (30), lequel régulateur de courant (28) fournit une impédance à l'alimentation à courant alternatif de transformateur (27) et comprend un condensateur en série.

2. Circuit d'attaque de lampe à DEL selon la revendication 1, comprenant en outre un circuit de protection de surtension (36) connecté de manière fonctionnelle à travers la sortie à courant continu (32) du convertisseur courant alternatif/courant continu (30).

3. Circuit d'attaque de lampe à DEL selon la revendication 2, dans lequel le circuit de protection de surtension (36) est une diode.

4. Circuit d'attaque de lampe à DEL selon la revendication 2, dans lequel le circuit de protection de surtension (36) comprend un redresseur commandé au silicium (42) connecté de manière fonctionnelle à un circuit déclencheur de redresseur commandé au silicium (44), dans lequel le circuit déclencheur de redresseur commandé au silicium (44) réagit à une surtension à travers la sortie à courant continu (32) pour activer le redresseur commandé au silicium (42).

5. Circuit d'attaque de lampe à DEL selon la revendication 1, dans lequel
les commutateurs (25) comprennent un premier commutateur et un second commutateur,
les signaux de pilotage (35) comprennent un premier signal de pilotage et un second signal de pilotage, et
le circuit transformateur symétrique (24) comprend un transformateur symétrique possédant
un premier enroulement primaire,
un second enroulement primaire,
un enroulement à rétroaction couplé au premier enroulement primaire et au second enroulement primaire, et
un enroulement secondaire couplé au premier enroulement primaire et au second enroulement primaire ; le premier commutateur réagissant au premier signal de pilotage^provenant d'une première extrémité de l'enroulement à rétroaction ; et le second commutateur réagissant au second signal de pilotage provenant d'une seconde extrémité de l'enroulement à rétroaction, le premier signal de pilotage et le second signal de pilotage étant connecté de manière fonctionnelle pour fermer le premier commutateur en alternance avec le second commutateur.

6. Circuit d'attaque de lampe à DEL selon la revendication 1, comprenant en outre une batterie connectée de manière fonctionnelle pour produire l'alimentation en courant continu à faible tension (23), et un réseau de DEL (34) connecté de manière fonctionnelle pour recevoir l'alimentation en courant continu à haute tension (31), le circuit d'attaque de lampe à DEL étant une source lumineuse pour un éclairage d'urgence.

7. Circuit d'attaque de lampe à DEL selon la revendication 5, dans lequel le transformateur possède une prise centrale entre le premier enroulement primaire et le second enroulement primaire, le circuit d'attaque de lampe à DEL comprenant en outre :
un premier circuit à courant continu allant d'une première borne d'entrée à courant continu à la prise centrale, en passant par le premier enroulement primaire, à travers le premier commutateur, jusqu'à la seconde borne d'entrée à courant continu lorsque le premier commutateur est fermé ; et
un second circuit à courant continu allant de la première borne d'entrée à courant continu à la prise centrale, en passant par le second enroulement primaire, à travers le second commutateur, jusqu'à la seconde borne d'entrée à courant continu lorsque le second commutateur est fermé.

8. Circuit d'attaque de lampe à DEL selon la revendication 7, comprenant en outre un inducteur d'alimentation connecté de manière fonctionnelle entre la première borne d'entrée à courant continu et la prise centrale dans le premier circuit à courant continu et le second circuit à courant continu.

9. Circuit d'attaque de lampe à DEL selon la revendication 5, comprenant en outre un filtre antibruit connecté de manière fonctionnelle à travers le premier enroulement primaire et le second enroulement primaire et/ou un filtre antibruit connecté de manière fonctionnelle à travers l'enroulement secondaire.

10. Procédé d'attaque de lampes à DEL à partir d'une alimentation en courant continu à faible tension, le procédé comprenant :
la fourniture d'un circuit transformateur symétrique pour élever la tension, le circuit transformateur symétrique possédant des commutateurs qui réagissent à des signaux de pilotage ;
la réception de l'alimentation en courant continu à faible tension au niveau du transformateur ;
la commande du transformateur en générant les signaux de pilotage pour fermer un commutateur en alternance avec l'autre commutateur et pour générer une oscillation régénératrice ;
la production d'une alimentation à courant alternatif de transformateur ; et
la fourniture d'un convertisseur pour la conversion de l'alimentation à courant alternatif de transformateur en alimentation en courant continu à haute tension,
**caractérisé par**
la fourniture d'un régulateur de courant, connecté de manière fonctionnelle au transformateur pour recevoir une alimentation à courant alternatif de transformateur et le régulateur de courant étant conçu pour fournir une impédance à l'alimentation à courant alternatif de transformateur et comprenant un condensateur en série ; et
la commande par le régulateur de courant de l'alimentation à courant alternatif de transformateur pour produire une alimentation à courant alternatif régulée pour le convertisseur.
